# EUROPÄISCHE PATENTSCHRIFT

(11) **EP 2 198 509 B1**
(45) Veröffentlichungstag und Bekanntmachung des Hinweises auf die Patenterteilung: **22.08.2018**
(21) Anmeldenummer: 08801759.5
(22) Anmeldetag: 29.08.2008
(51) Int. Cl.: H02M 7/12, H02M 7/797, H02M 1/32, H02M 5/458

(54) **ANORDNUNG ZUR VORLADUNG EINES ZWISCHENKREISKONDENSATORS ÜBER EINE VERSORGUNGSSPANNUNG**
ARRANGEMENT FOR PRE-CHARGING A RESERVOIR CAPACITOR BY MEANS OF A SUPPLY VOLTAGE
ARRANGEMENT DE PRÉ-CHARGE D'UN CONDENSATEUR DE CIRCUIT INTERMÉDIAIRE PAR UNE TENSION D'ALIMENTATION

(30) Priorität: 07.09.2007 DE 102007042528
(43) Veröffentlichungstag der Anmeldung: 23.06.2010
(73) Patentinhaber: SEW-EURODRIVE GmbH & Co. KG, 76646 Bruchsal (DE)
(72) Erfinder: DEPRE, Frank-Jörg, 76356 Weingarten (DE)
(86) Internationale Anmeldenummer: PCT/EP2008/007080
(87) Internationale Veröffentlichungsnummer: WO 2009/033574

(56) Entgegenhaltungen:
- EP-B- 1 099 290
- DE-A1-102004 042 312
- DE-C1- 19 840 819
- US-A1- 2003 002 298
- US-A1- 2005 122 752
- US-A1- 2005 253 165

## Beschreibung

Die Erfindung betrifft eine Anordnung, bestehend aus einem als Versorgungsmodul ausgeführten System.

Es sind Umrichter bekannt, die einen aus dem einphasigen oder mehrphasigen Wechselspannungsnetz versorgbaren Gleichrichter umfassen, dem ein Glättungskondensator, der auch als Zwischenkreiskondensator bezeichnet wird, nachgeschaltet ist. Aus dem Zwischenkreis wird bekannterweise eine Wechselrichterendstufe versorgt, die aus der unipolaren Zwischenkreisspannung eine dreiphasige Wechselspannung erzeugt, mit der ein Drehstrommotor gespeist wird.

Aus der US 2003/002298 A1 ist ein Umrichter bekannt, dessen Endstufe zum Vorladen des Zwischenkreiskondensators des Umrichters aus einer Versorgungsspannung im Hochsetzstellerbetrieb betreibbar ist. Dabei fließt während der Vorladung Strom über den als Motor ausgeführten Verbraucher.

Aus der DE 198 40 819 C1 ist ein Startersystem für einen Verbrennungsmotor bekannt.

Aus der EP 1 099 290 B ist ein integrierter Steuerungsmodus für Kleinleistungssysteme bekannt.

Aus der US 2005/253165 A1 ist ein adaptives Ansteuersystem für einen Wechselrichter bekannt.

Aus der DE 10 2004 042 312 A1 ist eine Stromversorgungseinrichtung bekannt.

US 2005/0122752 A1 offenbart eine Anordnung, bestehend aus einem als Versorgungsmodul ausgeführten System, insbesondere Vierquadrantensteller, und daraus versorgbaren, ebenfalls als Module ausgeführten Verbrauchern, wobei das Versorgungsmodul einen über zumindest einen Gleichrichter beladbaren Kondensator, insbesondere Zwischenkreiskondensator, umfasst, wobei der Gleichrichter aus einem Wechselstromnetz versorgbar ist, wobei der als Endstufe ausgebildete Gleichrichter drei Halbbrücken umfasst, welche jeweils aus einer Reihenschaltung von zwei elektronischen Leistungsschaltern, insbesondere IGBT oder MOSFET bestehen, wobei die elektronischen Leistungsschalter der Endstufe mit einer Netzstellerdrossel zusammen einen Hochsetzsteller bilden und derart ausgeführt sind, dass die am Kondensator anliegende Spannung, also Zwischenkreisspannung, auf einen Wert, der mit bloßer Gleichrichtung der Netzspannung nicht erreichbar ist, hin regelbar ist, wobei die Verbraucher als Umrichter ausgeführt sind und ansonsten aus der am Kondensator anliegenden Spannung, also der Zwischenkreisspannung, versorgt sind, wobei die Umrichter eine Endstufe aufweisen, aus der jeweils ein Drehstrommotor versorgt wird. Der Erfindung liegt daher die Aufgabe zugrunde, eine rückspeisefähige Einheit weiterzubilden.

Erfindungsgemäß wird die Aufgabe durch eine Anordnung gemäß Anspruch 1 gelöst. Vorteilhafte Ausführungsformen sind in den abhängigen Ansprüchen definiert. Von Vorteil ist dabei, dass eine Vorladung aus einer Versorgungsspannung, die nicht die Netzwechselspannung ist, ausgeführt wird. Somit ist ein langsames strombegrenztes Aufladen des Kondensators ausführbar. Hohe Ströme beim Anschalten eines leeren Kondensators ans Netz sind somit verhindert. Vorteiligerweise sind jedoch keine strombegrenzenden Mittel zwischen Netz und Kondensator notwendig und somit ein sehr dynamisches Verhalten ausführbar, also schnelle Wechsel beim Leistungsbedarf der Verbraucher schnell aus dem Netz befriedigbar. Vorlademittel für den Kondensator sind somit entbehrlich und daher die Standzeit erhöht.

Die Versorgungsspannungsquelle ist also vorzugsweise derart gestaltet, dass sie geringere Ströme und Spannungen zu liefern vermag als das Netz.

Bei einer vorteilhaften Ausgestaltung umfasst das Mittel einen DC/DC-Wandler, insbesondere Hochsetzsteller. Von Vorteil ist dabei, dass eine Strombegrenzung mittels der Auslegung und Dimensionierung des Wandlers ausführbar ist.

Bei einer vorteilhaften Ausgestaltung ist die Versorgungsspannung eine Gleichspannung, insbesondere zur Versorgung von Steuer- und/oder Signalelektronik, insbesondere beträgt sie im Wesentlichen 24 Volt. Von Vorteil ist dabei, dass eine unabhängige externe Steuerspannung der industriellen Anlage verwendbar ist. Die industrieübliche 24 Volt Versorgung liefert beispielsweise bis zu 8 Ampere und ist separat verlegt. Somit ist nicht nur die Ausfallsicherheit der Steuerelektronik des Systems erhöht sondern auch ein Vorladen, also ein Verzicht auf Lademittel für den Kondensator, ermöglicht.

Bei einer vorteilhaften Ausgestaltung ist der Gleichrichter aus einem einphasigen Wechselstromnetz oder mehrphasigen Wechselstromnetz, insbesondere Drehstromnetz, versorgbar, insbesondere abhängig vom Schaltzustand eines Schalters, wie Netzschütz oder dergleichen. Von Vorteil ist dabei, dass ein sicherer Schutz gewährleistbar ist mittels des Öffnens des Schützes. Erst wenn der Schütz geschlossen wird, ist das Netz mit dem Kondensator über zumindest den Gleichrichter verbunden. Bei einer vorteilhaften Ausgestaltung ist das System als Versorgungsmodul ausgeführt und die Verbraucher sind ebenfalls als Module ausgeführt, die über eine Stromverschienung miteinander elektrisch lösbar verbindbar sind. Von Vorteil ist dabei, dass ein modularer Aufbau erreichbar ist und somit ein den Anforderungen schnell und einfach anpassbares System erzeugbar ist. Außerdem ist nur eine geringe Teileanzahl und somit ein geringes Lagervolumen bei einer hohen Varianz der erzeugbaren System-Varianten notwendig.

Bei einer vorteilhaften Ausgestaltung weist die Versorgungsspannung einen kleineren Wert, Effektivwert oder Mittelwert auf als der Effektivwert der Wechselspannung des Wechselstromnetzes. Von Vorteil ist dabei, dass der Kondensator nur langsam beladbar ist und somit auch ein Schutz vor zu hohen Strömen ausgeführt ist. Bei Ausfall der Versorgungsspannung ein Zuschalten des Netzes verhindert, da die Steuerelektronik, insbesondere also auch die Signalelektronik, nicht versorgt ist.

Bei einer vorteilhaften Ausgestaltung ist aus der Versorgungsspannung die Signalelektronik versorgt, welche auch Mittel zur Erzeugung von pulsbreitenmodulierten Ansteuersignalen für Leistungsschalter umfasst. Von Vorteil ist dabei, dass eine sinusförmige Rückspeisung ins Netz ausführbar ist. Dabei wird vorzugsweise eine Pulsbreitenmodulationsfrequenz von mehr als 1 kHz verwendet, beispielsweise 4, 8, 12 oder 16 kHz.

Bei einer vorteilhaften Ausgestaltung umfasst der Gleichrichter Dioden und jeder Diode ist zumindest ein elektronischer Leistungsschalter, insbesondere IGBT, MOSFET oder dergleichen, zugeordnet. Von Vorteil ist dabei, dass eine sinusförmige Rückspeisung ausführbar ist, indem Mittel zur Erfassung der Netzspannung an drei Netzphasen vorgesehen sind, womit dann Betrag und Richtung des Netzspannungszeigers bestimmt werden. Wenn nur an zwei Netzphasen Spannungserfassungsmittel vorgesehen sind, ist die dritte rechnerisch bestimmbar. Zwischen den Mitteln und dem Netzwechselrichter, umfassend Gleichrichter und Leistungsschalter, sind noch die Netzdrossel, insbesondere auch als Netzstellerdrossel 12 bezeichnet, und ein Netzfilter 11 sowie Stromerfassungsmittel anordenbar.

Auf diese Weise ist eine Regelung der Zwischenkreisspannung auf einen Arbeitswert, beispielsweise 750 Volt, hin ausführbar. Die Schalter der Endstufe arbeiten sozusagen als Hochsetzsteller. Der Arbeitswert liegt also über demjenigen Wert der Zwischenkreisspannung, die beim bloßen Beladen des Zwischenkreiskondensators und dauerhaft geöffneten Schaltern der Endstufe ohne Leistungsentnahme durch Verbraucher sich einstellen würde, also beispielsweise 560 Volt.

Wenn auch bei motorischem Betrieb der Verbraucher die Schalter der Endstufe pulsbreitenmoduliert betrieben werden, ist somit ein Vierquadrantensteller, also eine rückspeisefähige AC/DC-Wandlereinheit mit sinusförmiger Stromaufnahme realisiert.

Statt der vor dem Gleichrichter angeordneten Stromerfassungsmittel ist auch ein Stromerfassungsmittel für den Zwischenkreisstrom verwendbar, wenn die Schalterstellung zum Messzeitpunkt berücksichtigt wird.

Insbesondere ist also mittels der Leistungsschalter Energie aus dem Kondensator ins Wechselstromnetz rückspeisbar.

Bei einer vorteilhaften Ausgestaltung sind Mittel zur Erfassung der Spannung am Kondensator, insbesondere Zwischenkreiskondensator, verbunden mit der Signalelektronik. Von Vorteil ist dabei, dass die Spannung am Kondensator überwachbar ist und außerdem abhängig von der Spannung beim Rückspeisen die Pulsweitenmodulationsdauer anpassbar ist, also bei gleichem zu stellenden Netzspannungswert und bei höherer Spannung am Kondensator der geöffnete Zustand des Schalters kürzer ist als bei kleinerer Spannung am Kondensator. Die Zwischenkreisspannung wird auf einen Arbeitswert, beispielsweise 750 Volt, hin geregelt.

Bei einer vorteilhaften Ausgestaltung sind Mittel zum Vergleichen der erfassten Spannung mit zumindest einem ersten und einem zweiten kritischen Wert vorgesehen. Von Vorteil ist dabei, dass ein Einschalten der Rückspeisung ins Netz erst dann ausführbar ist, wenn eine genügend hohe Spannung am Kondensator detektiert wird. Der pulsbreitenmodulierte Betrieb der Schalter der Endstufe führt zu einer netzfreundlichen sinusförmigen Entnahme von Leistung aus dem Netz, wenn die Verbraucher in Summe motorisch betrieben sind, und zu einer ebenso netzfreundlichen sinusförmigen Rückspeisung ins Netz, wenn die Verbraucher in Summe generatorisch betrieben sind. Somit ist insbesondere bei in Summe motorischem Betrieb der Blindleistungsverbrauch verringert.

Bei einer vorteilhaften Ausgestaltung ist der Ausgang eines Mittels zum Vergleichen mit einem Mittel zur Freigabe einer Vorladung aus der Versorgungsspannung verbunden. Von Vorteil ist dabei, dass die beiden Mittel verknüpfbar sind und somit nur bei Anliegen eines Freigabesignals und bei gleichzeitigem Unterschreiten des ersten kritischen Wertes durch die Spannung am Kondensator ein Vorladen ausgeführt wird.

Bei einer vorteilhaften Ausgestaltung ist zwischen Netz und Gleichrichter ein Schalter angeordnet, der mit dem Ausgang eines Mittels zum Vergleichen mit dem ersten kritischen Wert verbunden ist. Von Vorteil ist dabei, dass der Schalter dann schließbar ist, wenn der erste Wert überschritten wird. Somit ist Zuschalten des Netzes vor Erreichen einer Mindestspannung verhindert und hohe Ströme treten nicht auf.

Bei einer vorteilhaften Ausgestaltung ist der Ausgang eines Mittels zum Vergleichen mit einem Mittel zur Freigabe einer Rückspeisung ins Netz, insbesondere mit einer Freigabe der pulsbreitenmodulierten Ansteuerung der Leistungsschalter, verbunden. Von Vorteil ist dabei, dass die beiden Mittel verknüpfbar sind und somit nur bei Anliegen eines Freigabesignals und bei gleichzeitigem Überschreiten des zweiten kritischen Wertes durch die Spannung am Kondensator eine Rückspeisung ausgeführt wird.

Bei einer vorteilhaften Ausgestaltung umfasst die Ansteuerung der Leistungsschalter eine galvanische Trennung. Von Vorteil ist dabei, dass die Steuerelektronik auf einem vom Potential der Leistungselektronik völlig verschiedenen Potential betreibbar ist.

Die Erfindung wird nun anhand von Abbildungen näher erläutert:

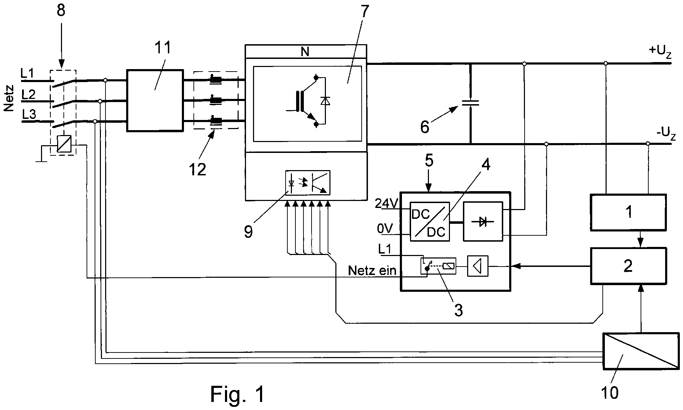

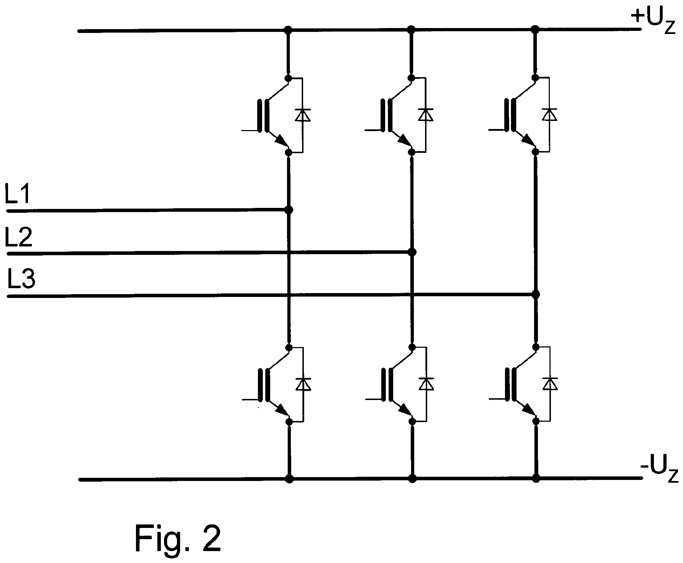

In der Figur 1 ist ein Blockschaltbild einer erfindungsgemäßen Vorrichtung gezeigt. Dabei ist eine Endstufe 7 zwischen die Netzphasen L1, L2, L3 und den Gleichspannungszwischenkreis angeordnet.

Am Zwischenkreis ist auch ein Mittel 1 zur Erfassung der Spannung des Zwischenkreises U_z angeordnet, das mit der Steuerelektronik 2 verbunden ist. Diese steuert den Schalter 3 für Ansteuerung des Netzschützes 8 an, sobald ein erster kritischer Spannungswert an Zwischenkreisspannung überschritten ist und somit der Zwischenkreiskondensator 6 eine genügende Vorladung aufweist.

Solange die Spannung noch unter dem kritischen Wert liegt, bleibt der Netzschütz 8 offen und die Vorrichtung ist geschützt vor zu hohen Strömen.

Wenn eine Freigabe für die Vorladung 4 erfolgt ist, wird aus der Versorgungsspannung für die Steuerelektronik 2 der Zwischenkreiskondensator aufgeladen, indem ein DC-DC-Wandler 4, also hier ein Hochsetzsteller, eingesetzt wird.

Während dieser Zeit der Vorladung werden die weiteren aus dem Zwischenkreis versorgten Verbraucher, wie beispielsweise umrichtergespeiste Elektromotoren, ausgeschaltet. Somit wird dem Zwischenkreis keine Leistung entnommen und die Vorladung aus der 24 Volt-Versorgungsspannung für die Steuerelektronik benötigt nur geringe Ströme.

Sobald die Vorladung bis zum kritischen Wert ausgeführt ist und somit der kritische Wert überschritten ist, wird der Netzschütz 8 zugeschaltet und der Zwischenkreiskondensator über die Freilaufdioden der Endstufe auf Netzspannungsniveau geladen. Als nächstes muss die Endstufenfreigabe erfolge, welche die Taktung der Endstufe startet und den Zwischenkreis auf den angestrebten Sollwert, beispielsweise ein Arbeitswert von 750 Volt, hochsetzt. Sodann ist auch eine Freigabe der Verbraucher ausführbar.

Der kritische Wert liegt beispielhaft im Bereich von 200 Volt bis 400 Volt, vorzugsweise 300 Volt. Die Beladung mittels der Freilaufdioden der Endstufe führt beispielsweise zu einer Zwischenkreisspannung von 500 Volt bis 700 Volt, vorzugsweise 560 Volt. Die Leistungsschalter der Endstufe arbeiten mit der Netzstellerdrossel 12 zusammen als Hochsetzsteller und ermöglichen somit einen geregelten Betrieb, bei dem die Zwischenkreisspannung auf 750 Volt, also auf einen Wert, der mit bloßer Gleichrichtung der Netzspannung nicht erreichbar ist, hin geregelt wird.

Die Endstufe umfasst drei Halbbrücken, welche jeweils aus einer Reihenschaltung von zwei elektronischen Leistungsschalter, insbesondere IGBT oder MOSFET-Schaltern, bestehen. Jedem Schalter ist eine Freilaufdiode zugeordnet.

Solange die Schalter geöffnet sind, wirken also die Freilaufdioden insgesamt wie ein dreiphasiger Gleichrichter und beladen somit den Zwischenkreis aus den drei Netzphasen mit einer unipolaren Spannung.

Wenn nun die Verbraucher Energie in den Zwischenkreis einspeisen, beispielsweise weil Antriebe in zumindest einer ersten Zeitspanne während des Betriebs generatorisch betrieben werden, wird die Spannung weiterhin auf den Arbeitswert, beispielsweise von 750 Volt, hin geregelt, indem die Endstufe 7 über die galvanisch getrennt ausgeführte Ansteuerung 9 pulsbreitenmoduliert angesteuert wird und somit ein dreiphasiges sinusförmiges Drehfeld erzeugt und rückgespeist wird aus der Zwischenkreisspannung.

Wenn die generatorische Leistung der Verbraucher die ins Netz rückspeisbare Leistung übersteigt, wird Energie an einen Bremswiderstand von einem hysteresegesteuerten Leistungsschalter freigegeben.

Ab Erreichen eines zweiten kritischen Wertes, beispielsweise der Arbeitswert, also ebenfalls 750 Volt, werden die Verbraucher zur Leistungsentnahme aus dem Zwischenkreis frei gegeben.

Der zweite kritische Wert liegt höher als die bei unbelastetem Zwischenkreis über die Beladung mittels der Freilaufdioden erreichbare Zwischenkreisspannung.

Als Verbraucher sind vorzugsweise Umrichter vorgesehen, die aus der Zwischenkreisspannung versorgbar sind, wobei sie nur eine Endstufe entsprechend der Endstufe 7 aufweisen und daraus einen Drehstrommotor versorgen, vorzugsweise einen Synchronmotor.

Die elektrischen Verbindungen für die Zwischenkreis-versorgten Antriebe und die Rückspeisung nach Figur 1 wird mit Stromschienen ausgeführt.

Der Zwischenkreiskondensator weist eine Kapazität von mehr als 500 µF auf, vorzugsweise 1 mF oder mehr.

Vorzugsweise sind die Verbraucher und die erfindungsgemäße Vorrichtung als Module ausgeführt, die eine zu der Stromverschienung passende jeweilige Schnittstelle aufweisen.

### Bezugszeichenliste

1 Mittel zur Erfassung der Spannung des Zwischenkreises U_z
2 Steuerelektronik
3 Schalter für Ansteuerung des Netzschützes
4 DC-DC Wandler
5 Freigabe Vorladung
6 Zwischenkreiskondensator
7 Endstufe
8 Netzschütz
9 Ansteuerung, galvanisch getrennt
10 Netzspannungserfassung
11 Netzfilter
12 Netzstellerdrossel
L1, L2, L3 Netzphasen

## Patentansprüche

1. Anordnung, bestehend aus einem als Versorgungsmodul ausgeführten System, insbesondere Vierquadrantensteller, und daraus versorgbaren, ebenfalls als Module ausgeführten Verbrauchern,
wobei das Versorgungsmodul einen über zumindest einen Gleichrichter beladbaren Kondensator, insbesondere Zwischenkreiskondensator (6), umfasst,
wobei der Gleichrichter aus einem Wechselstromnetz versorgbar ist,
wobei zumindest ein Mittel (4) zur Vorladung des Kondensators aus einer Versorgungsspannung vorgesehen ist, die eine Gleichspannung ist, die innerhalb der Anordnung nicht aus der Netzwechselspannung abgeleitet ist,
wobei der als Endstufe (7) ausgebildete Gleichrichter **drei** Halbbrücken umfasst, welche jeweils aus einer Reihenschaltung von zwei elektronischen Leistungsschaltern, insbesondere IGBT oder MOSFET, bestehen, denen jeweils eine Diode zugeordnet ist,
wobei die elektronischen Leistungsschalter der Endstufe (7) mit einer Netzstellerdrossel (12) zusammen einen Hochsetzsteller bilden und derart ausgeführt sind, dass die am Kondensator anliegende Spannung, also Zwischenkreisspannung, auf einen Wert, der mit bloßer Gleichrichtung der Netzspannung nicht erreichbar ist, hin regelbar ist,
wobei aus der Versorgungsspannung Signalelektronik versorgt ist, welche auch Mittel (1) zur Erzeugung von pulsbreitenmodulierten Ansteuersignalen für die elektronischen Leistungsschalter umfasst,
wobei die Verbraucher als Umrichter ausgeführt sind, die während der Zeit der Vorladung ausgeschaltet sind und ansonsten aus der am Kondensator anliegenden Spannung, also der Zwischenkreisspannung, versorgt sind, wobei die Umrichter eine Endstufe (7) aufweisen, aus der jeweils ein Drehstrommotor versorgt wird.

2. Anordnung nach Anspruch 1,
**dadurch gekennzeichnet, dass**
das Mittel (1) einen DC/DC-Wandler (4), insbesondere Hochsetzsteller, umfasst.

3. Anordnung nach mindestens einem der vorangegangenen Ansprüche,
**dadurch gekennzeichnet, dass**
die Versorgungsspannung eine Gleichspannung, insbesondere zur Versorgung von Steuer- und/oder Signalelektronik, ist, insbesondere im Wesentlichen 24 Volt beträgt.

4. Anordnung nach mindestens einem der vorangegangenen Ansprüche,
**dadurch gekennzeichnet, dass**
der Gleichrichter aus einem einphasigen Wechselstromnetz oder mehrphasigen Wechselstromnetz, insbesondere Drehstromnetz, versorgbar ist, insbesondere abhängig vom Schaltzustand eines Schalters, wie Netzschütz (8) oder dergleichen.

5. Anordnung nach mindestens einem der vorangegangenen Ansprüche,
**dadurch gekennzeichnet, dass**
das System als Versorgungsmodul ausgeführt ist und die Verbraucher ebenfalls als Module ausgeführt sind, die über eine Stromverschienung miteinander elektrisch lösbar verbindbar sind.

6. Anordnung nach mindestens einem der vorangegangenen Ansprüche,
**dadurch gekennzeichnet, dass**
die Versorgungsspannung einen kleineren Wert, Effektivwert oder Mittelwert aufweist als der Effektivwert der Wechselspannung des Wechselstromnetzes.

7. Anordnung nach mindestens einem der vorangegangenen Ansprüche,
**dadurch gekennzeichnet, dass**
mittels der elektronischen Leistungsschalter Energie aus dem Kondensator ins Wechselstromnetz einspeisbar ist und umgekehrt.

8. Anordnung nach mindestens einem der vorangegangenen Ansprüche,
**dadurch gekennzeichnet, dass**
Mittel (1) zur Erfassung der Spannung am Kondensator, insbesondere Zwischenkreiskondensator (6), verbunden sind mit der Signalelektronik.

9. Anordnung nach Anspruch 8,
**dadurch gekennzeichnet, dass**
Mittel (1) zum Vergleichen der erfassten Spannung mit zumindest einem ersten und einem zweiten kritischen Wert vorgesehen sind.

10. Anordnung nach Anspruch 9,
**dadurch gekennzeichnet, dass**
der Ausgang eines Mittels zum Vergleichen mit einem Mittel (1) zur Freigabe einer Vorladung aus der Versorgungsspannung verbunden ist.

11. Anordnung nach Anspruch 9 oder 10,
**dadurch gekennzeichnet, dass**
zwischen dem Wechselstromnetz und dem Gleichrichter ein Schalter (3) angeordnet ist, der mit dem Ausgang eines Mittels zum Vergleichen mit dem ersten kritischen Wert verbunden ist.

12. Anordnung nach einem der Ansprüche 10 bis 11,
**dadurch gekennzeichnet, dass**
der Ausgang eines Mittels zum Vergleichen mit einem Mittel (1) zur Freigabe einer Einspeisung und/oder Rückspeisung ins Wechselstromnetz, insbesondere mit einer Freigabe der pulsbreitenmodulierten Ansteuerung (9) der elektronischen Leistungsschalter, verbunden ist, und/oder dass die Ansteuerung (9) der elektronischen Leistungsschalter eine galvanische Trennung umfasst.

## Claims

1. Arrangement consisting of a system designed as a power supply module, in particular an H-bridge, and consumers which can be supplied therefrom and which are likewise designed as modules,
wherein the power supply module comprises a capacitor which can be charged via at least one rectifier, in particular a DC link capacitor (6),
wherein the rectifier can be supplied from an AC mains, wherein at least one means (4) is provided for pre-charging the capacitor from a supply voltage, which is a direct voltage that is derived within the arrangement and not from the mains alternating voltage,
wherein the rectifier designed as an output stage (7) comprises three half-bridges which each consist of a series connection of two electronic power switches, in particular IGBTs or MOSFETs, that are each assigned a diode,
wherein the electronic power switches of the output stage (7) together with a mains adjustment choke (12) form a step-up converter and are designed such that the voltage applied to the capacitor, that is to say the DC link voltage, can be regulated to a value that is unachievable by mere rectification of the mains voltage,
wherein signal electronics are supplied from the supply voltage, said signal electronics including means (1) for generating pulse-width-modulated actuation signals for the electronic power switches,
wherein the consumers are designed as inverters which are switched off during the pre-charging time and otherwise are supplied from the voltage applied to the capacitor, that is to say the DC link voltage, the inverters having an output stage (7) from which in each case a three-phase motor is supplied.

2. Arrangement according to claim 1,
**characterized in that**
the means (1) comprises a DC/DC converter (4), in particular a step-up converter.

3. Arrangement according to at least one of the preceding claims,
**characterized in that**
the supply voltage is a direct voltage, in particular for supplying control electronics and/or signal electronics, and in particular is substantially 24 Volt.

4. Arrangement according to at least one of the preceding claims,
**characterized in that**
the rectifier can be supplied from a single-phase AC mains or multi-phase AC mains, in particular a three-phase mains, in particular depending on the switching state of a switch, such as a mains contactor (8) or the like.

5. Arrangement according to at least one of the preceding claims,
**characterized in that**
the system is designed as a power supply module and the consumers are likewise designed as modules, which can be detachably electrically connected to one another via a busbar.

6. Arrangement according to at least one of the preceding claims,
**characterized in that**
the supply voltage has a smaller value, effective value or mean value than the effective value of the alternating voltage of the AC mains.

7. Arrangement according to at least one of the preceding claims,
**characterized in that**
energy can be fed from the capacitor into the AC mains and vice versa by means of the electronic power switches.

8. Arrangement according to at least one of the preceding claims,
**characterized in that**
means (1) for detecting the voltage on the capacitor, in particular the DC link capacitor (6), are connected to the signal electronics.

9. Arrangement according to claim 8,
**characterized in that**
means (1) for comparing the detected voltage with at least one first and one second critical value are provided.

10. Arrangement according to claim 9,
**characterized in that**
the output of a means for comparing is connected to a means (1) for enabling a pre-charging from the supply voltage.

11. Arrangement according to claim 9 or 10,
**characterized in that**
a switch (3) is arranged between the AC mains and the rectifier, said switch being connected to the output of a means for comparing with the first critical value.

12. Arrangement according to one of claims 10 to 11,
**characterized in that**
the output of a means for comparing is connected to a means (1) for enabling a feed-in and/or feed-back to the AC mains, in particular with an enabling of the pulse-width-modulated actuation (9) of the electronic power switches,
and/or **in that**
the actuation (9) of the electronic power switches comprises a galvanic isolation.

## Revendications

1. Agencement constitué d'un système réalisé sous la forme d'un module d'alimentation, en particulier d'un convertisseur à quatre quadrants, et de consommateurs pouvant être alimentés à partir de celui-ci, également réalisés sous la forme de modules,
dans lequel le module d'alimentation comprend un condensateur, en particulier un condensateur de circuit intermédiaire (6), pouvant être chargé par l'intermédiaire d'au moins un redresseur,
dans lequel le redresseur peut être alimenté à partir d'un réseau à courant alternatif, dans lequel au moins un moyen (4) est prévu pour précharger le condensateur à partir d'une tension d'alimentation qui est une tension continue qui n'est pas dérivée de la tension alternative du réseau à l'intérieur de l'agencement,
dans lequel le redresseur conçu comme étage final (7) comprend trois demi-ponts, consistant chacun en une connexion en série de deux commutateurs de puissance électroniques, en particulier d'IGBT ou de MOSFET, à chacun desquels est associée une diode,
dans lequel les commutateurs de puissance électroniques de l'étage final (7) et une self de convertisseur de réseau (12) forment ensemble un convertisseur élévateur et sont réalisés de telle sorte que la tension présente au condensateur, c'est-à-dire la tension de circuit intermédiaire, peut être régulée à une valeur qui ne peut pas être atteinte par simple redressement de la tension de réseau,
dans lequel une électronique de signalisation est alimentée à partir de la tension d'alimentation, laquelle comprend également un moyen (1) pour générer des signaux de commande modulés en largeur d'impulsion pour les commutateurs de puissance électroniques,
dans lequel les consommateurs sont réalisés sous la forme de variateurs qui sont désactivés pendant le temps de la précharge et sont autrement alimentés à partir de la tension présente au condensateur, c'est-à-dire la tension de circuit intermédiaire, les variateurs présentant un étage final (7) à partir duquel, dans chaque cas, un moteur à courant triphasé est alimenté.

2. Agencement selon la revendication 1,
**caractérisé en ce**
**que** le moyen (1) comprend un convertisseur DC/DC (4), en particulier un convertisseur élévateur.

3. Agencement selon au moins l'une des revendications précédentes,
**caractérisé en ce**
**que** la tension d'alimentation est une tension continue, en particulier pour l'alimentation de l'électronique de commande et/ou de signalisation, en particulier sensiblement de 24 volts.

4. Agencement selon au moins l'une des revendications précédentes,
**caractérisé en ce**
**que** le redresseur peut être alimenté à partir d'un réseau à courant alternatif monophasé ou d'un réseau à courant alternatif polyphasé, en particulier d'un réseau à courant triphasé, en particulier en fonction de l'état de commutation d'un commutateur, tel qu'un contacteur de réseau (8) ou analogue.

5. Agencement selon au moins l'une des revendications précédentes,
**caractérisé en ce**
**que** le système est réalisé sous la forme d'un module d'alimentation et les consommateurs sont également réalisés sous la forme de modules qui peuvent être reliés entre eux électriquement de manière amovible au moyen d'un jeu de barres.

6. Agencement selon au moins l'une des revendications précédentes,
**caractérisé en ce**
**que** la tension d'alimentation présente une valeur, valeur efficace ou valeur moyenne, inférieure à la valeur efficace de la tension alternative du réseau à courant alternatif.

7. Agencement selon au moins l'une des revendications précédentes,
**caractérisé en ce**
**que** l'énergie du condensateur peut être injectée dans le réseau à courant alternatif et vice versa au moyen des commutateurs de puissance électroniques.

8. Agencement selon au moins l'une des revendications précédentes,
**caractérisé en ce**
**que** des moyens (1) de détection de la tension au condensateur, en particulier au condensateur de circuit intermédiaire (6), sont reliés à l'électronique de signalisation.

9. Agencement selon la revendication 8,
**caractérisé en ce**
**que** des moyens (1) de comparaison de la tension détectée avec au moins une première et une deuxième valeur critique sont prévus.

10. Agencement selon la revendication 9,
**caractérisé en ce**
**que** la sortie d'un moyen de comparaison est reliée à un moyen (1) d'autorisation d'une précharge à partir de la tension d'alimentation.

11. Agencement selon la revendication 9 ou 10,
**caractérisé en ce**
**qu'**un commutateur (3) qui est relié à la sortie d'un moyen de comparaison avec la première valeur critique est disposé entre le réseau à courant alternatif et le redresseur.

12. Agencement selon l'une des revendications 10 à 11,
**caractérisé en ce**
**que** la sortie d'un moyen de comparaison est reliée à un moyen (1) d'autorisation d'une injection et/ou d'une réinjection dans le réseau à courant alternatif, en particulier avec une autorisation de la commande modulée en largeur d'impulsion (9) des commutateurs de puissance électroniques, et/ou
**que** la commande (9) des commutateurs de puissance électroniques comprend une isolation galvanique.
